## Europäisches Patentamt
## European Patent Office
## Office européen des brevets

(11) Numéro de publication: **0 038 749**
**B1**

(12) **FASCICULE DE BREVET EUROPEEN**

(45) Date de publication du fascicule du brevet: **18.07.84**

(51) Int. Cl.³: **B 23 B 31/10**

(21) Numéro de dépôt: **81400607.8**

(22) Date de dépôt: **15.04.81**

(54) Mandrin de serrage, en particulier pour machines-outils.

(30) Priorité: **17.04.80 FR 8008618**

(43) Date de publication de la demande:
**28.10.81 Bulletin 81/43**

(45) Mention de la délivrance du brevet:
**18.07.84 Bulletin 84/29**

(84) Etats contractants désignés:
**DE FR GB IT**

(56) Documents cités:
**FR - A - 2 310 181**
**GB - A - 1 422 383**

(73) Titulaire: **LA PRECISION INDUSTRIELLE**
**23, avenue de la République**
**F-92505 Rueil Malmaison Hauts-de-Seine (FR)**

(72) Inventeur: **Le Moal, Jean-Pierre**
**26, rue Ivan Tourgueneff**
**F-78380 Bougival (FR)**

(74) Mandataire: **De Boisse, Louis et al,**
**37, Avenue Franklin D. Roosevelt**
**F-75008 Paris (FR)**

## Description

La présente invention concerne un mandrin de serrage pour machines-outils.

On cannaît depuis longtemps des mandrins de serrage pour machines-outils, dont chaque mors comporte une pièce de support, montée coulissante dans une glissière radiale du mandrin, et une pièce de serrage, fixée de façon amovible à la pièce de support (en fait, cette dernière est généralement appelée "porte-mors", le terme de "mors" étant réservé à la pièce de serrage, mais il y a lieu de renoncer à cette terminologie usuelle, qui compliquerait indûment la description de la présente invention, et spécialement l'énoncé des revendications).

Dans ces mandrins de serrage, de type connu, la pièce de serrage de chaque mors est généralement fixée à la pièce de support correspondante à l'aide de boulons, traversant ladite pièce de serrage. L'opération d'échange des mors d'un tel mandrin, qui doit intervenir fréquemment lorsque la machine-outil munie de ce mandrin doit servir successivement à usiner des pièces de configurations différentes, dont les unes doivent être serrées extérieurement par les mors, tandis que d'autres doivent l'être par leur alésage intérieur, nécessite donc, pour chaque mors, une succession appropriée de manoeuvres; si ces manoeuvres sont effectuées manuellement, leur durée, multipliée par le nombre de mors du mandrin de serrage—trois le plus souvent—peut atteindre facilement et même dépasser plusieurs minutes. La complexité des manoeuvres à effectuer les rend d'autre part impossibles à automatiser, par exemple par le recours à un robot; ce dernier devrait en effet être en mesure d'utiliser un outil de serrage de boulons, tel qu'une clé. Même en admettant qu'il soit possible de réaliser un robot suffisamment perfectionné pour effectuer automatiquement toutes les manoeuvres de changement de mors, il est peu vraisemblable qu'il y parvienne en une durée très inférieure à cell nécessaire à la réalisation manuelle de cette opération. Or, une durée de plusieurs minutes pour échanger l'ensemble des mors est généralement considérée comme excessive sur une ligne de fabrication automatique.

La FR—A 2.310.181 (EXPERIMENTALNY) décrit un mandrin de serrage pour machines-outils dont chaque mors comporte une pièce de support, montée coulissante dans une glissière radiale du mandrin, une pièce de serrage, qui est appliquée sur une surface de la pièce de support, transversale à l'axe du mandrin, un organe d'accouplement, mobile dans des logements des deux pièces, alignés dans une direction parallèle à l'axe du mandrin, et des moyens pouvant être actionnés de l'extérieur du mandrin pour déplacer l'organe d'accouplement dans ses logements alignés, entre une position d'accouplement, dans laquelle ledit organe serre les deux pièces l'une contre l'autre, et une position de libération, dans laquelle la pièce de serrage peut être séparée de la pièce de support correspondante, par un mouvement radial de direction axifuge. Cette disposition permet donc un changement relativement rapide des pièces de serrage du mandrin, mais elle présente cependant les inconvénients suivants: la composante, parallèle à l'axe du mandrin, de la résultante des efforts qui sont appliqués à chaque pièce de serrage lors du fonctionnement de la machine-outil, est transmise intégralement à la pièce de support correspondante par l'intermédiaire de l'organe d'accouplement, qui assure à lui seul la liaison mécanique entre les deux pièces. Les efforts ainsi transmis peuvent entraîner une déformation ou même, éventuellement, à la longue, une détérioration de l'organe d'accouplement des deux pièces, mais aussi des moyens qui sont prévus pour actionner l'organe d'accouplement de l'extérieur du mandrin, sous la forme notamment d'un excentrique, auquel ces mêmes efforts sont transmis par ledit organe d'accouplement. Par ailleurs, la position précise de chaque pièce de serrage, amovible, par rapport à la pièce de support correspondante, étant définie par la coopération de la première avec certaines des dents d'une crémaillère radiale, portée par ladite pièce de support, chaque opération de changement d'une pièce de serrage doit comporter le choix de la position de la nouvelle pièce de serrage par rapport à la crémaillère de la pièce de support correspondante, ce choix étant guidé par exemple par les graduations circulaires qui sont visibles sur la figure 1 de cette demande de brevet. Il en résulte évidemment un allongement substantiel de la durée totale du changement des mors.

La présente invention a pour objet principal de permettre la réalisation d'un mandrin de serrage pour machines-outils, du type indiqué précédemment, qui autorise une réduction encore plus importante du temps nécessaire pour une opération de changement des mors, sans présenter cependant les inconvénients du mandrin de serrage selon la FR—A 2.310.181, précédemment mentionnée.

Le mandrin de serrage pour machines-outils selon la présente invention est également du type dans lequel chaque mors comporte une pièce de support, montée coulissante dans une glissière radiale du mandrin, une pièce de serrage, qui est appliquée sur une surface de la pièce de support, transversale à l'axe du mandrin, un organe d'accouplement, mobile dans des logements des deux pièces, alignés dans une direction non perpendiculaire à l'axe du mandrin, et des moyens pouvant être actionnés de l'extérieur du mandrin pour déplacer l'organe d'accouplement dans ses logements alignés; le mandrin de serrage selon la présente invention est caractérisé en ce que chaque pièce de serrage est montée coulissante dans une glissière radiale, dont au moins l'extrémité la plus éloignée de l'axe du mandrin est ouverte, et que l'organe d'accouplement est mobile entre une position de rétraction dans son logement, à l'intérieur de l'une des deux pièces du mors, et une position d'accouplement, dans laquelle l'organe d'accouplement est engagé au moins partiellement dans chacun des logements à l'intérieur des deux pièces du mors.

L'échange des mors du mandrin de serrage selon la présente invention nécessite donc, pour chaque mors, exclusivement les manoeuvres suivantes: libérer l'accouplement de ses deux pièces, séparer la pièce de serrage de la pièce de support correspondante en faisant coulisser ladite pièce de serrage dans sa glissière radiale vers l'extérieur du mandrin; engage la nouvelle pièce de serrage dans sa glissière radiale jusqu'à ce qu'elle soit parvenue dans sa position d'accouplement, qui est unique, et atteinte lorsque le logement de la pièce de serrage parvient en regard de celui de la pièce de support correspondante, ce qui permet alors aux moyens, actionnés de l'extérieur du mandrin, de déplacer ledit organe d'accouplement à partir de sa position de rétraction dans son logement à l'intérieur de l'une des deux pièces du mors, de telle sorte qu'il s'engage au moins partiellement dans le logement de son autre pièce. Comme il n'est pas nécessaire de rechercher la position définitive correcte de la nouvelle pièce de serrage par rapport à la pièce de support correspondante, ces manoeuvres de changement de mors ne nécessitent, si elles sont effectuées manuellement, qu'une durée notablement inférieure à la minute pour chaque mors, c'est-à-dire une durée certainement inférieure à celle requise par les mandrins de serrage antérieurement connus. Par ailleurs, les manoeuvres de changement de mors du mandrin de serrage selon la présente invention sont aisément automatisables, notamment en utilisant un robot relativement simple, puisque celui-ci n'a pas à choisir la position de chaque nouvelle pièce de serrage par rapport à la pièce de support correspondante. En fait, l'ensemble des trois mors d'un mandrin de serrage selon la présente invention peut être aisément échangé en une durée inférieure ou égale à 30 secondes, en utilisant un robot industriel d'un type courant. Une telle rapidité de l'échange des mors autorise l'emploi du mandrin de serrage selon la présente invention sur des machines-outils faisant partie de lignes de fabrication entièrement automatisées. D'autre part, comme la pièce de serrage de chaque mors du mandrin selon la présente invention est montée coulissante dans une glissière radiale, la composante, parallèle à l'axe du mandrin, de la résultante des efforts auxquels ladite pièce de serrage est soumise lors du fonctionnement de la machine-outil, est transmise exclusivement aux parois de la glissière radiale, et non pas à l'organe d'accouplement et à ses moyens d'actionnement. Ceci supprime donc tout risque d'endommagement ou de détérioration de l'organe d'accouplement de chaque mors et des moyens prévus pour l'actionner de l'extérieur du mandrin.

Dans une forme de réalisation préférée du mandrin de serrage pour machines-outils selon la présente invention, l'organe d'accouplement est un verrou mobile dans son logement, dans une direction parallèle à l'axe du mandrin, l'extrémité saillante dudit verrou pénétrant avec un faible jeu dans un évidement de la surface d'application de l'autre pièce du mors.

Cette forme de réalisation de l'invention est particulièrement avantageuse, dans la mesure où elle permet de prévoir un organe d'accouplement très simple, sous la forme d'un verrou mobile dans son logement. Dans ce cas, par exemple, les moyens pour déplacer le verrou comprennent un excentrique, disposé de préférence radialement dans la pièce correspondante du mors, de façon à pouvoir être commandé par pivotement, de l'extérieure du mandrin.

A titre d'exemple, on a décrit ci-dessous et illustré schématiquement au dessin annexé, une forme de réalisation du mandrin de serrage pour machine-outil selon la présente invention.

La figure 1 est une vue de face d'un mors de cette forme de réalisation;

la figure 2 est une vue en plan du mors de la figure 1;

la figure 3 est une vue en coupe suivant la ligne III—III de la figure 2;

les figures 4 et 5 illustrent, en coupe transversale à son axe, suivant la ligne IV—IV de la figure 3, deux positions angulaires différentes d'une came aménagée sur l'axe de l'excentrique de commande dont est pourvu chaque mors de la forme de réalisation illustré sur les figures 1 à 3.

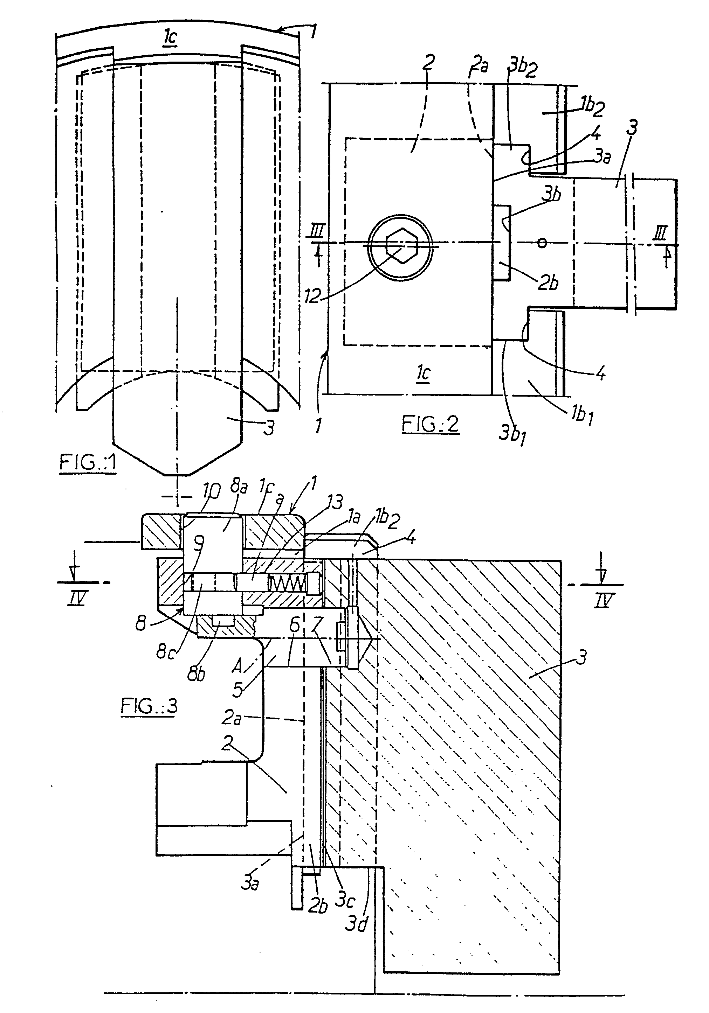

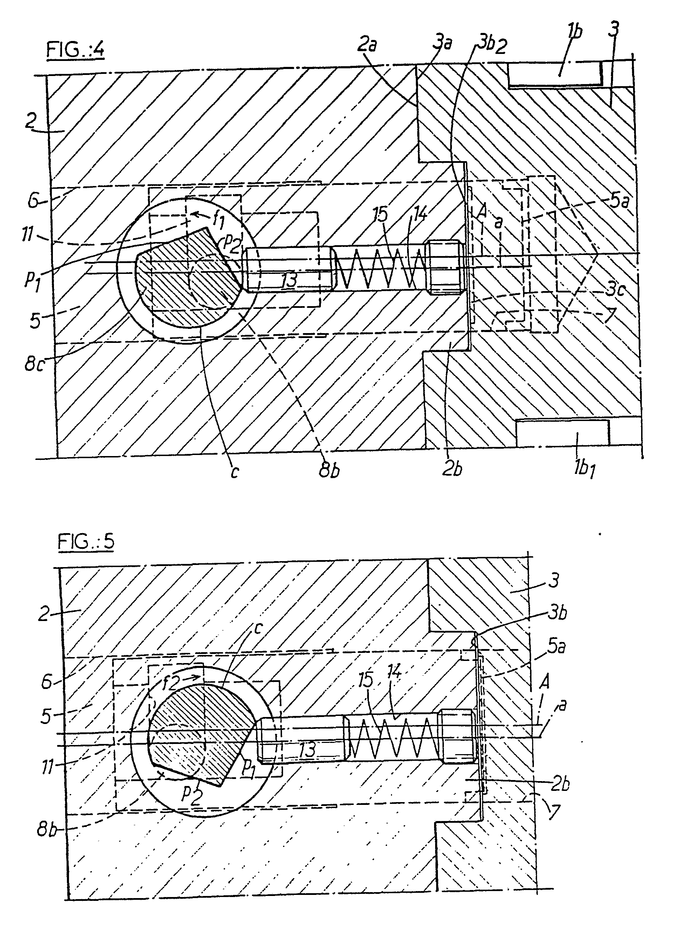

Sur les figures 1 à 3, 1 désigne le plateau d'un mandrin de serrage pour machine-outil, dans lequel sont aménagées par exemple trois glissières radiales, telles que 1a, à 120 degrés les unes des autres, dans chacune desquelles est montée librement coulissante une pièce de support 2 (ou "porte-mors"); les déplacements synchrones des trois pièces de support telles que 2, dans leurs glissières radiales respectives, telles que 1a, sont commandés, généralement à l'aide d'un vérin hydraulique, par l'intermédiaire d'une transmission mécanique, dont il existe différentes formes de réalisation connues, qu'il n'est donc pas nécessaire de décrire en détail. A chaque pièce de support telle que 2 est fixée de façon amovible une pièce de serrage, 3, qui constitue le mors proprement dit. Dans la forme de réalisation considérée, les deux pièces, 2 et 3, de chaque mors sont appliquées respectivement l'une sur l'autre par deux surfaces, 2a et 3a, perpendiculaires à l'axe du mandrin (qui est horizontal sur les figures 1 et 3). D'autre part, la surface d'application de l'une des deux pièces de chaque mors, notamment la surface d'application 2a de la pièce de support 2, comporte une partie saillante formée par au moins une nervure, 2b, qui s'étend dans la direction axiale du mandrin (horizontalement sur la figure 3). Cette nervure 2b est engagée dans une rainure de forme complémentaire, 3b, s'ouvrant dans la surface d'application, 3a, de l'autre pièce du mors, c'est-à-dire de sa pièce de serrage 3.

Selon la présente invention, la pièce de serrage 3 du mors illustré sur les figures 1 à 3 est également montée dans une glissière radiale, 4, qui, dans cet exemple, est aménagée dans le plateau 1 du mandrin, ou tout au moins dans des pièces qui en sont solidaires. Comme visible sur la figure 2, la partie de la pièce de serrage 3 de chaque mors, qui est en contact avec la pièce de support correspondante 2, au niveau de leurs surfaces d'application, 2a et 3a, a une section en forme de T, et les ailes, $3b_1$ et $3b_2$, de cette partie en forme de T de la pièce de serrage 3 sont montées librement coulissantes, dans des rainures 4, aménagées dans les bords intérieurs de plaques en forme de secteur annulaire, $1b_1$ et $1b_2$, qui sont fixées par des vis ou des boulons, non représentés, sur la face du plateau 1 du mandrin, dans laquelle s'ouvrent les glissières 1a des pièces de support telles que 2. Dans la forme de réalisation considérée, les extrémités les plus éloignées de l'axe du mandrin, des glissières radiales, telles que 1a, des pièces de support, telles que 2, sont fermées par la paroi périphérique 1c du plateau du mandrin, de façon à conférer à celui-ci une meilleure résistance mécanique, et à éviter notamment que les parois latérales des glissières radiales, telles que 1a, ne soient soumises à des efforts d'écartement, dus à la composante axiale de la résultante des forces appliquées au mors correspondant, notamment lorsque le mandrin est en rotation rapide. Par contre, selon la présente invention, les mêmes extrémités des glissières radiales telles que 4, dans lesquelles sont montées coulissantes les pièces de serrage telles que 3, sont ouvertes.

D'autre part, selon la présente invention, un organe d'accouplement des deux pièces 2 et 3 du mors, constitué essentiellement par un verrou en forme de tige, 5, dont la section transversale peut avoir une forme quelconque, est monté mobile dans un logement de forme complémentaire, 6, qui est aménagé dans la pièce de support 2, et qui débouche sur sa surface d'application 2a. Comme visible en traits interrompus sur les figures 4 et 5, le verrou 5 est mobile dans son logement 6 entre une position de rétraction (figure 5), et une position active, dans laquelle une partie dudit verrou 5 pénètre avec un faible jeu dans un évidement 7 du fond de la rainure de guidage, 3b, de la pièce de serrage 3, cet évidement 7 ayant une section transversale de même forme que le verrou 5. Dans l'exemple de réalisation illustré, le logement 6 et l'évidement 7 sont coaxiaux, leur axe commun A étant parallèle à celui du mandrin. D'autre part, une entaille 3c, de faible profondeur, est en outre aménagée au fond de la rainure de guidage, 3b, de la pièce de serrage 3; cette entaille 3c s'étend radialement à partir de l'évidement 7 en direction de l'axe du mandrin, et elle s'ouvre sur la face, 3d, de ladite pièce de serrage 3, qui est la plus proche dudit axe (figure 3).

L'organe de commande du verrou 5 est un excentrique 8, qui est monté dans un logement radial 9 de la partie de la pièce de support 2, la plus proche de la paroi périphérique 1c du plateau 1 du mandrin. Cette paroi périphérique 1c présente d'autre part un évidement 10 au niveau du débouché du logement radial 9 de l'excentrique 8. Ce dernier comporte un axe 8a, qui est monté de façon à pouvoir tourner librement dans le logement radial 9; l'extrémité de cet axe 8a qui se trouve du côté de l'axe du mandrin porte un ergot excentré 8b, qui est monté librement mobile dans une glissière, formée par un évidement 11 pratiqué dans la partie de la surface latérale du verrou 5 qui est tournée vers l'excentrique 8, transversalement à l'axe A dudit verrou 5. L'autre extrémité de l'axe 8a de l'excentrique 8 sort du logement radial 9 aménagé dans la pièce de support 2 et comporte en bout un évidement hexagonal 12 (figure 2) pour l'engagement d'une clef. Lorsque la pièce de support 2 du mors considéré occupe, dans sa glissière radiale 1a, une position voisine de la paroi périphérique 1c du plateau 1 du mandrin, l'extrémité de l'axe 8a de l'excentrique 8 qui sort de ladite pièce 2 est engagée dans l'évidement 10 de ladite paroi périphérique 1c, comme visible sur la figure 3, si bien que l'évidement hexagonal 12 est pratiquement au niveau de ladite paroi périphérique 1c.

Selon la présente invention, des moyens sont prévus pour bloquer l'excentrique de commande 8 du verrou 5 dans sa position correspondant à l'accouplement des pièces 2 et 3 du mors, ainsi que, dans l'exemple de réalisation considéré, dans sa position correspondant à leur désaccouplement. Comme illustré sur les figures 4 et 5, ces moyens de blocage peuvent être formés par un poussoir 13 coulissant librement dans un perçage borgne 14, pratiqué dans la pièce de support 2, de manière que l'axe $a$ de ce perçage 14 soit parallèle à l'axe A du verrou 5 et de son logement 6; un ressort 15, prenant appui sur le fond du perçage borgne 14, tend à appliquer le poussoir 13 contre le pourtour d'une section en forme de came, 8c, conformée par exemple, comme visible sur les figures 4 et 5, avec deux plats $p_1$ et $p_2$. L'ensemble est aménagé de façon que, dans la position où le verrou 5 accouple les pièces 2 et 3 du mors, le poussoir 13 exerce une poussée sur l'arête de raccordement entre le plat $p_2$ et la partie cylindrique $c$ de la came 8c, ce qui a pour effet d'exercer sur l'axe 8a de l'excentrique 8 un couple de sens opposé à celui de la flèche $f_1$ (figure 4); ce couple tend donc à appliquer l'ergot 8b de l'excentrique 8 contre la paroi terminale de la glissière 11 aménagée dans le verrou 5, et à bloquer ainsi l'excentrique 8 et le verrou 5 dans leur position correspondant à l'accouplement des pièces 2 et 3. Pour les désaccoupler, il suffit alors, comme on l'a indiqué précédemment, d'introduire l'extrémité d'une clef appropriée dans l'évidement hexagonal 12 (figure 2) aménagé à l'extrémité de l'axe 8a de l'excentrique 8 et de faire tourner ce dernier, au moyen de ladite clef, dans le sens de la flèche $f_1$ (figure 4), de telle façon que le téton 8b dudit excentrique 8 se déplace dans sa glissière transversale 11 à partir de sa position extrême indiquée en pointillés sur la figure 4. L'extrémité du poussoir 13 coopère alors avec la surface cylindrique $c$ de la came 8c. Le verrou 5 parvient dans sa position de rétraction à l'intérieur de son logement 6 après une rotation d'un angle correspondant à la surface cylindrique $c$ de la came 8c, le téton 8b ayant parcouru deux fois en sens inverse la glissière transversale 11 et étant revenu au contact de sa même paroi terminale. On voit sur la figure 5 que le poussoir 13 exerce alors encore une poussée, sur l'arête de raccordement entre le plat $p_1$ et la surface cylindrique $c$ de la came 8c, ce qui a pour effet d'exercer sur l'axe 8a de l'excentrique un couple de sens opposé à celui de la flèche $f_2$ et tendant par suite encore à appliquer le téton 8b contre la paroi terminale de la glissière transversale 11; ceci a donc pour effet de bloquer l'excentrique 8 et le verrou 5 dans leur position correspondant au désaccouplement des pièces 2 et 3. Dans cette dernière position, la pièce de serrage 3 du mors peut être aisément séparée de sa pièce de support 2 en la faisant coulisser dans la glissière radiale 4 vers l'extérieur du mandrin, c'est-à-dire dans la direction axifuge (vers le haut de la figure 3). Une autre pièce de serrage 3 peut être alors engagée, de l'extérieur du mandrin, dans la glissière radiale 4; l'extrémité 5a du verrou 5, qui sort de son logement sur une faible longueur, pénètre alors dans l'entaille 3c du fond de la rainure de guidage 3b, comme visible sur la figure 5; le coulissement radial de la pièce de serrage 3 dans la glissière 4 est arrêté lorsque l'évidement 7 de ladite pièce de serrage 3 est parvenu exactement en regard de l'extrémité 5a du verrou 5, puisque l'entaille 3c n'est pas prolongée au-delà dudit évidement 7 dans la direction axifuge. Pour accoupler alors la pièce de support 2 du mors avec la nouvelle pièce de serrage 3, il suffit, au moyen d'une clef, de faire tourner l'excentrique 8 dans le sens de la flèche $f_2$ (figure 5), le verrou 5 pénétrant alors sans obstacle dans l'évidement 7 grâce à leur alignement précis.

La présente invention n'est pas limitée à la forme de réalisation décrite. Elle englobe toutes ses variantes. Le blocage de l'excentrique et du verrou en position de désaccouplement est facultatif. Les moyens pour assurer ce blocage peuvent être réalisés de toute autre façon connue, par exemple au moyen d'une bille qu'un ressort tend à pousser dans un billage de l'axe de l'excentrique. Les moyens pour commander la rotation de l'excentrique de l'extérieur du mandrin sont susceptibles de nombreuses réalisations différentes; il suffit que le logement de l'excentrique débouche à l'extérieur de la partie correspondante du mors, par un orifice livrant passage ou donnant accès à une extrémité de l'excentrique ou de son axe, ou bien à un prolongement latéral dudit excentrique ou dudit axe, pour en permettre la rotation, à la main ou à l'aide d'un outil approprié. L'organe de commande de la translation du verrou peut être d'un type connu quelconque. La direction de déplacement du verrou, donc aussi celle de l'axe de son logement et de l'évidement correspondant dans l'autre pièce du mors sont matières à option; il suffit que cette direction ne soit pas perpendiculaire à l'axe du mandrin. Le verrou peut lui-même être remplacé par un organe approprié d'accouplement, monté dans un logement, qui s'étend à l'intérieur de l'une des deux pièces de chaque mors, dans une direction non perpendiculaire à l'axe du mandrin, et qui débouche sur la surface d'application de ladite pièce, de façon que ledit organe d'accouplement soit mobile entre une position de rétraction, et une position active, dans laquelle une partie de l'organe d'accouplement est en prise avec un élément complémentaire, aménagé sur la surface d'application de l'autre pièce du mors. Bien entendu, le verrou et son organe de commande, ou bien l'organe d'accouplement équivalent, au lieu d'être montés sur la pièce de support 2 de chaque mors, pourraient l'être sur sa pièce de serrage 3. Par ailleurs, la glissière radiale 4 de la pièce de serrage, 3, de chaque mors, au lieu d'être aménagée dans le plateau 1 du mandrin, pourrait l'être dans la pièce de support correspondante, 2.

**Revendications**

1. Mandrin de serrage pour machines-outils, dont chaque mors comporte une pièce de support (2), montée coulissante dans une glissière radiale (1a) du mandrin, un pièce de serrage (3), qui est appliquée sur une surface (2a) de la pièce de support (2), transversale à l'axe du mandrin, un organe d'accouplement (5), mobile dans des logements (6 et 7) des deux pièces (2 et 3), alignés dans une direction non perpendiculaire à l'axe du mandrin, et des moyens pouvant être actionnés de l'extérieur du mandrin pour déplacer l'organe d'accouplement (5) dans ses logements alignés (6 et 7), caractérisé en ce que chaque pièce de serrage (3) est montée coulissante dans une glissière radiale (4), dont au moins l'extrémité la plus éloignée de l'axe du mandrin est ouverte, et que l'organe d'accouplement (5) est mobile entre une position de rétraction dans son logement (6 ou 7) à l'intérieur de l'une des deux pièces (2, 3) du mors, et une position d'accouplement, dans laquelle l'organe d'accouplement (5) est engagé au moins partiellement dans chacun des logements (6 et 7) à l'intérieur des deux pièces (2 et 3) du mors.

2. Mandrin selon la revendication 1, caractérise en ce que la glissière radiale (4) de la pièce de serrage (3) de chaque mors est aménagée dans le plateau (1) du mandrin.

3. Mandrin selon la revendication 1, caractérisé en ce que la glissière radiale (4) de la pièce de serrage (3) de chaque mors est aménagée dans la pièce de support (2) correspondante.

4. Mandrin selon l'une quelconque des revendications 1 à 3, caractérisé en ce que l'organe d'accouplement est un verrou (5) mobile dans son logement (6), dans une direction (A) parallèle à l'axe du mandrin, l'extrémité saillante dudit verrou (5) pénétrant avec un faible jeu dans un évidement (7) de la surface d'application (3a ou 2a) de l'autre pièce (3 ou 2) du mors.

5. Mandrin selon la revendication 4, caractérisé en ce que les moyens pour déplacer le verrou comprennent un excentrique (8), disposé de préférence radialement dans la pièce correspondante (2 ou 3) du mors, de façon à pouvoir être commandé par pivotement, de l'extérieur du mandrin.

6. Mandrin selon la revendication 5, caractérisé en ce que le logement (9) de l'excentrique (8) débouche à l'extérieur de la pièce correspondante (2 ou 3) du mors, par un orifice livrant passage ou donnant accès à une extrémité (8a) de l'excentrique (8) ou de son axe, ou bien à un prolongement latéral dudit excentrique (8) ou dudit axe, pour en permettre la rotation à la main ou à l'aide d'un outil approprié.

7. Mandrin selon la revendication 6, dans lequel les extrémités les plus éloignées de l'axe du mandrin, des glissières radiales (1a) des pièces de support (2) des mors, sont fermées par la paroi périphérique (1c) du plateau (1) du mandrin, caractérisé en ce que, le logement (6) du verrou (5) de chaque mors étant aménagé dans la pièce de support (2) correspondante, la paroi périphérique (1c) du plateau (1) du mandrin est évidée (en 10) au niveau des débouchés des logements (9) des excentriques (8) de commande des verrous (5) des différents mors.

8. Mandrin selon l'une quelconque des revendications 5 à 7, caractérisé en ce que des moyens sont prévus pour bloquer l'excentrique de commande (8) dans sa position correspondant à l'accouplement des deux pièces (2, 3) du mors correspondant, et éventuellement aussi dans sa position correspondant à leur désaccouplement, par exemple sous la forme d'un poussoir (13), qu'un ressort (15) applique contre une section en forme de came (8c) de l'axe dudit excentrique (8), cette section (8c) étant conformée de manière que, dans la position d'accouplement, et éventuellement aussi dans celle de désaccouplement, le poussoir (13) exerce sur l'axe (8a) de l'excentrique (8) un couple tendant à appliquer le téton (8b) dudit excentrique (8) contre une paroi terminale d'une glissière transversale (11) du verrou (5), dans laquelle est engagé ledit téton (8b).

9. Mandrin selon l'une quelconque des revendications 2 à 8, caractérisé en ce que des moyens de guidage radial, tels qu'une nervure (2b) et une rainure (3b) de formes complémentaires, sont prévus sur les surfaces d'application (2a, 3a) des deux pièces (2, 3) de chaque mors.

**Patentansprüche**

1. Spannfutter für Werkzeugmaschinen, deren Spannbacken jeweils eine in einer radial verlaufenden Führung des Futters verschiebbar angeordnete Grundbacke (2) aufweisen, ferner eine an einer quer zur Futterachse verlaufenden Fläche (2a) der Grundbacke (2) anliegende Aufsatzbacke (3) ein Kupplungsglied (5), das in innerhalb der Grundbacke eine Aufsatzbacke (2 bzw. 3) angeordneten Ausnehmungen beweglich ist, die in einer zur Futterachse nicht senkrechten Richtung miteinander fluchten, sowie von außerhalb des Spannfutters betätigbare Stellmittel zum Verschieben des Kupplungsgliedes (5) innerhalb der miteinander fluchtenden Ausnehmungen (6 und 7), dadurch gekennzeichnet, daß jede Aufsatzbacke (3) in einer radial verlaufenden Führung (4) verschiebbar angeordnet ist, die wenigstens an ihrem von der Futterachse am weitesten entfernt liegenden Ende offen ist, und daß das Kupplungsglied (5) zwischen einer zurückgezogenen Stellung in einer der Ausnehmungen (6 oder 7) innerhalb der Grundbacke (2) oder der Aufsatzbacke (3) und einer Kupplungsstellung beweglich ist, in der es wenigstens teilweise in die in der Grundbacke (2) und in der Aufsatzbacke (3) angeordneten Ausnehmungen (6 und 7) hineinragt.

2. Spannfutter nach Anspruch 1, dadurch gekennzeichnet, daß die radiale Gleitführung (4) der Aufsatzbacke (3) jeder Spannbacke im Futterkörper (1) des Spannfutters untergebracht ist.

3. Spannfutter nach Anspruch 1, dadurch gekennzeichnet, daß die radiale Gleitführung (4) der Aufsatzbacke (3) jeder Spannbacke in der entsprechenden Grundbacke (2) untergebracht ist.

4. Spannfutter nach einem der vorhergehenden Ansprüche, dadurch gekennzeichnet, daß das Kupplungsglied aus einem Riegel (5) besteht, der in seiner Ausnehmung (6) in einer zur Futterachse parallelen Richtung (A) beweglich ist, und mit seinem überstehenden Ende mit geringem Spiel in eine Ausnehmung (7) in der Anlagefläche (3a oder 2a) des anderen Backenteils der Spannbacke hineinragt.

5. Spannfutter nach Anspruch 4, dadurch gekennzeichnet, daß die Stellmittel zum Verschieben des Riegels einen Exzenter (8) umfassen, der innerhalb des entsprechenden Backenteils (2 oder 3) der Spannbacke vorzugsweise radial verlaufend derart angeordnet ist, daß er von außerhalb des Spannfutters durch Drehen betätigbar ist.

6. Spannfutter nach Anspruch 5, dadurch gekennzeichnet, daß die Aufnahme (9) des Exzenters (8) an der Außenseite des entsprechenden Backenteils (2 oder 3) der Spannbacke mit einer Öffnung mündet, die als Zugang zu einem Ende (8a) des Exzenters (8) oder seiner Achse oder einer seitlichen Verlängerung des Exzenters (8) oder seiner Achse dient, um dessen Drehung von Hand oder mit Hilfe eines geeigneten Werkzeuges zu ermöglichen.

7. Spannfutter nach Anspruch 6, bei dem die von der Futterachse am weitesten entfernten Enden der radialen Gleitführungen (1a) der Grundbacken (2) der Spannbacken durch eine Umfangswand (1c) des Futterkörpers (1) geschlossen sind, dadurch gekennzeichnet, daß bei Unterbringung der Ausnehmung (6) für den Riegel (5) jeder Spannbacke innerhalb der entsprechenden Grundbacke (2) die Umfangswand (1c) des Futterkörpers (1) in Höhe der Mündungen der Aufnahmen (9) der Exzenter (8) für die Riegelverstellung der verschiedenen Spannbacken (bei 10) jeweils ausgenommen ist.

8. Spannfutter nach einem der Ansprüche 5 bis 7, dadurch gekennzeichnet, daß Einrichtungen zur Sicherung des Stellexzenters (8) in seiner der Verbindung der beiden Backenteile (2, 3) der Spannbacke entsprechenden Kupplungsstellung und eventuell auch in seiner die Verbindung der beiden Backenteile aufhebenden Stellung vorgesehen sind, beispielsweise in Form eines Stößels (13), den eine Feder (15) gegen einen Nockenabschnitt (8c) des Achskörpers des Exzenters (8) vorspannt, wobei dieser Nockenabschnitt (8c) derart ausgebildet ist, daß der Stößel (13) in der Kupplungsstellung und eventuell auch in der Freigabestellung auf den Achskörper (8a) des Exzenters (8) ein Drehmoment, ausübt, aufgrund dessen der exzentrische Zapfen (8b) des Exzenters (8) gegen die Endwand einer querverlaufenden Gleitführung (11) des Riegels (5) gedrückt wird, mit welcher der Zapfen (8b) in Eingriff steht.

9. Spannfutter nach einem der Ansprüche 2 bis 8, dadurch gekennzeichnet, daß auf den Anlageflächen (2a, 3a) der beiden Backenteile (2, 3) jeder Spannbacke Radialführungsmittel, wie z.B. eine Führungsrippe (2b) und eine Führungsnut (3b) miteinander komplementären Querschnitten vorgesehen sind.

**Claims**

1. A chuck for machine tools, each jaw of which consists of a support component (2), mounted so as to slide in a radial slide-guide (1a) of the chuck; a gripping component (3), which is applied to one surface (2a) of the support component (2), transverse to the axis of the chuck; a connecting member (5), movable within housings (6 and 7) of the two components (2 and 3), which housings are aligned in a direction which is not perpendicular to the axis of the chuck; and means which can be actuated from outside the chuck for displacing the connecting member (5) in its aligned housings (6 and 7), characterised in that each gripping component (3) is mounted so as to slide in a radial slide-guide (4), of which at least the end furthest from the axis of the chuck is open, and that the connecting member (5) is movable between a retracted position in its housing (6 or 7) within one of the two components (2, 3) of the jaw, and a connecting position, in which the connecting member (5) is engaged at least partially in each of the housings (6 and 7) within the two components (2 and 3) of the jaw.

2. A chuck according to claim 1, characterised in that the radial slide-guide (4) of the gripping component (3) of each jaw is disposed in the chuck plate (1) of the chuck.

3. A chuck according to claim 1, characterised in that the radial slide-guide (4) of the gripping component (3) of each jaw is disposed in the corresponding support component (2).

4. A chuck according to any one of claims 1 to 3, characterised in that the connecting member is a bolt (5), movable in its housing (6), in a direction (A) parallel to the axis of the chuck, with the protruding end of the said bolt (5) penetrating with slight play into a recess (7) of the bearing surface (3a or 2a) of the other component (3 or 2) of the jaw.

5. A chuck according to claim 4, characterised in that the means for displacing the bolt consist of an eccentric (8), disposed preferably radially in the corresponding component (2 or 3) of the jaw, in such a way that it can be driven by pivoting, from outside the chuck.

6. A chuck according to claim 5, characterised in that the housing (9) of the eccentric (8) debouches to the outside of the corresponding component (2 or 3) of the jaw by means of an aperture allowing passage or affording access to one end (8a) of the eccentric (8) or of its shaft, or perhaps to a lateral extension of the said eccentric (8) or of the said shaft, in order to allow it to be rotated by hand or with the aid of an appropriate tool.

7. A chuck according to claim 6, in which the ends, which are furthest from the axis of the chuck, of the radial slide-guides (1a) of the support components (2) of the jaws are closed by the peripheral wall (1c) of the chuck plate (1) of the chuck, characterised in that the housing (6) of the bolt (5) of each jaw is disposed in the corresponding support component (2), and the peripheral wall (1c) of the chuck plate (1) of the chuck is recessed (at 10) at the level of the mouths of the housings (9) of the eccentrics (8) which drive the bolts (5) of the different jaws.

8. A chuck according to any of claims 5 to 7, characterised in that means are provided for locking the driving eccentric (8) in its position corresponding to the connection of the two components (2, 3) of the corresponding jaw, and in case of need also in its position corresponding to their disconnection, for example in the form of a button (13) applied by a spring (15) against a cam-shaped section (8c) of the shaft of the said eccentric (8), this section (8c) being configured in such a way that in the position of connection, and if need be also in that of disconnection, the button (13) exerts on the shaft (8a) of the eccentric (8) a torque tending to press the nipple (8b) of the said eccentric (8) against an end wall of a transverse slide-guide (11) of the bolt (5), in which the said nipple (8b) engages.

9. A chuck according to any of claims 2 to 8, characterised in that means of radial guidance, such as a rib (2b) and a groove (3b) which are complementary in form, are provided on the bearing surfaces (2a, 3a) of the two components (2, 3) of each jaw.

FIG.:1

FIG.:2

FIG.:3

FIG.:4

FIG.:5